(19) Europäisches Patentamt / European Patent Office / Office européen des brevets

(11) **EP 2 883 613 B1**

(12) **EUROPEAN PATENT SPECIFICATION**

(45) Date of publication and mention
of the grant of the patent:
**09.09.2020 Bulletin 2020/37**

(21) Application number: **13829331.1**

(22) Date of filing: **13.08.2013**

(51) Int Cl.:
*B02C 4/30* (2006.01)    *B01J 8/24* (2006.01)
*C01B 33/00* (2006.01)    *C01B 33/021* (2006.01)
*B02C 4/02* (2006.01)    *B02C 4/28* (2006.01)
*B02C 23/16* (2006.01)

(86) International application number:
**PCT/CN2013/081356**

(87) International publication number:
**WO 2014/026588 (20.02.2014 Gazette 2014/08)**

(54) **METHOD FOR PREPARING HIGH SPHERICITY SEED CRYSTAL AND FLUIDIZED BED PARTICLE SILICON**

VERFAHREN ZUR HERSTELLUNG VON IMPFKRISTALLEN MIT HOHER SPHÄRIZITÄT UND WIRBELBETTPARTIKELSILICIUM

PROCÉDÉ DE PRÉPARATION DE GERME CRISTALLIN À HAUTE SPHÉRICITÉ ET DE SILICIUM PARTICULAIRE DE LIT FLUIDISÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.08.2012 US 201261682549 P**

(43) Date of publication of application:
**17.06.2015 Bulletin 2015/25**

(73) Proprietor: **Jiangsu Zhongneng Polysilicon Technology Development Co., Ltd.**
**Jiangsu Province 221004 (CN)**

(72) Inventors:
• **MIXON, David**
**Fairless Hills, Pennsylvania 19030 (US)**
• **NELAN, Christopher**
**Fairless Hills, Pennsylvania 19030 (US)**

(74) Representative: **Hanna Moore + Curley**
**Garryard House**
**25/26 Earlsfort Terrace**
**Dublin 2, D02 PX51 (IE)**

(56) References cited:
WO-A1-2005/005048    CN-A- 101 410 184
CN-A- 102 438 945    CN-A- 102 463 171
CN-A- 102 530 951    US-A- 5 798 137
US-A1- 2005 135 986    US-A1- 2010 243 963
US-A1- 2010 266 762    US-B2- 7 950 600

• **DATABASE WPI Week 199423 Thomson Scientific, London, GB; AN 1994-188675 XP002741946, & JP H06 127916 A (TOA GOSEI CHEM IND LTD) 10 May 1994 (1994-05-10)**

EP 2 883 613 B1

Description

FIELD OF THE INVENTION

This invention relates to the production of polysilicon, it also relates to the method for generating high sphericity seed for the operation of a fluidized bed reactor to produce granular polysilicon.

BACKGROUND OF THE INVENTION

US 2010/243963 A1 and US 5,798,137 A are representative of the relevant state of the art.

Polysilicon is a key raw material in photovoltaic industry and electronic information industry, and is an important product to realize the country's new energy strategy. Since year of 2015, With the rise and prosperity of the photovoltaic industry, China's polysilicon industry is also experienced leaping development. But from this year, faced with the major shrinking PV market in European, and situation of the "double reverse" launched by Europe and America, how to achieve grid parity is the key initiatives to protect the industry to develop, in which the basic raw material polysilicon costs down is crucial.

Basically, the method of preparing polysilicon includes modified Siemens, metallurgy, fluidized bed reactor (FBR), and so on. FBR is a polysilicon technology which is developed by Union Carbide company in the United States. In this method, $SiCl_4$, $H_2$, HCl and silicon are used as material, $SiHCl_3$ (TCS) is generated in the FBR(bubbling bed) under high temperature and pressure condition, $SiH_2Cl_2$ is generated by the disproportionation of $SiHCl_3$, then silane is generated by the disproportionation of $SiH_2Cl_2$. Silane or chlorosilane is introduced into FBR with granular silicon seeds(seed) under 500°C~1200°C, the thermal decomposition reaction is carried out continuous, and granular polysilicon is produced. In accordance with the type of silicon-containing gas introduced into the FBR, the FBR is usually divided into silane and chlorosilane FBR (such as TCS-FBR). Since the surface area participating in the reaction of silicon particles in FBR is large, so that this method is high production efficiency, low power consumption and low cost. Another advantage of FBR is, in downstream crystal growth process, the silicon particles can be directly loaded into the crystal growth crucible, but the traditional modified Siemens production of polysilicon rod products need crushing and sorting treatment before loading into the crucible, also need other treatments. For example, high-purity inorganic acid etching, washed with ultrapure water, drying and processing in a clean environment, and so on. Thus, compared with the modified Siemens, energy consumption of FBR process is very low, deposition efficiency is high, continuous operation is capable. The granular silicon product is beneficial for downstream use, wafer manufacturing cost can be reduced, thus, the current cost of production of photovoltaic cell is reduced significantly.

It is desirable to maintain a steady-state, largely spherical shape factor for the particles within the fluidized bed in order to ensure consistent, continuous FBR operation and performance for a fixed feed rate of fluidizing gas. The fluidization of particles with higher sphericity will increase the minimum fluidization velocity for the fluidized bed, in comparison to the use of particles with lower sphericity. This also has the desirable effect of reducing the reactor diameter required for the use of a fixed fluidizing gas feed rate and fixed ratio of $U_g/U_{mf}$, where $U_g$ is the superficial velocity of fluidizing gas and $U_{mf}$ is the minimum fluidization velocity. Thus, preparation of high spherical seed is crucial for FBR performance and long-term stable operation.

Silicon seed particles are usually prepared by sieving, grinding, crushing, etc. For example, in accordance with the particle size, the FBR silicon particles are filtered, the qualified silicon particles are as product to package, substandard silicon particles are recycled directly back to the FBR. The sieving method usually sieves large particles, then small particles, its raw material utilization is low, material handling capacity and seed production are limited. The grinding method is easy to produce dust, causing inconvenience to the separation and subsequent use of the seeds. The crushing method is also referenced like crushing a polysilicon rod, but only low sphericity seeds can be prepared, i.e. the most seeds prepared are irregular shape. This irregular composition is unfavorable in a fluidized bed due to its abnormal fluidization characteristics and reduced minimum fluidization and slugging velocities. This can cause increased elutriation of particles from the FBR and a greater void space within the bed. Erratic levels of fluidization and increased bubble phase will also promote unwanted formation of sub-micron fines, resulting from the "free-space", or homogeneous, gas phase decomposition of silicon source gas (e.g. $SiHCl_3$, $SiH_2Cl_2$, $SiHBr_3$, $SiH_2Br_2$, and $SiH_4$). These fines are undesirable due to the potential for plugging of downstream equipment and piping, if not filtered properly. The fines also have an extremely high surface-area-to-volume ratio, are susceptible to surface contamination, and can therefore contaminate the growing granules by physical incorporation into their structure during the growth process.

Although greater non-sphericity of the particles will result in a lower minimum fluidization velocity during continuous operation, an increased gas feed rate is required to initially fluidize such particles from a packed bed condition, in comparison to the fluidization of more spherical particles. As such, an abnormally high pressure drop across the bed will be experienced until the irregularly shaped particles have become "unlocked" and complete fluidization is achieved. Moreover, once fluidization is reached the porosity of the bed for a more non-spherical mixture of particles will be greater than that for a more spherical mixture. As mentioned, this creates the unwanted propensity for fines formation. Furthermore, particles that exhibit sharp-edges are more susceptible to unwanted dust formation, through abrasion and attrition mechanisms. Therefore, to avoid the aforementioned negative factors, still need a method to prepare high sphericity seed, the process should be simple and can meet the industrialized mass production, without creating dust, resulting seed with a narrow particle size distribution.

## SUMMARY OF THE INVENTION

One object of the present invention is to provide a method as detailed in the claims that follow. The present invention can also be disclosed that according to the PSD of silicon particles for raw material, to adjust the gap width between the sets of rollers, in order to obtain high sphericity seed with certain size and narrow PSD rang.

According to the present invention for generating high sphericity seed, the high spherical seed can be obtained by roller apparatus through only once treatment. Compared to sieving method, the present invention is easier, without classification sieving, can save much more time; can crush large particles by crush rollers, and small particles pass through directly, which handle a large amount of raw materials and all the raw materials are converted to seeds, its raw material utilization is higher. Compared to grinding method, the present invention does not produce sub-micron fines, the seed prepared has a high sphericity and a narrow PSD range.

According to the present invention for generating high sphericity seed and fluidized bed granular silicon, the generated seeds with high sphericity and narrow PSD range are recycled back into FBR, this composition of seeds are favorable to maintain the smooth operation of the fluidized bed, prolong the operating cycle of the fluidized bed. Meanwhile, the porosity of the bed is small, thus the free space and formation of silicon fines by homogeneous nucleation which will cause downstream pipeline blocked or contamination of the product, or other issues are avoided.

## BRIEF DESCRIPTION OF THE DRAWINGS

Figure 1 is a schematic diagram of the apparatus for generating high sphericity seed of the present invention.
Figure 2 is another schematic diagram of the apparatus for generating high sphericity seed of the present invention.
Figure 3 is a simplified process flow schematic diagram for the operation of a fluidized bed reactor and seed generation of the present invention.
Figure 4 is a graph showing minimum fluidization velocity vs. sphericity.
Figure 5 is the PSD schematic diagram of the feed granular silicon to the roll crusher in example 1.
Figure 6 is the PSD columnar schematic diagram of feed granular silicon before crushing and seed after crushing in example 1.
Figure 7 is the PSD curve of feed granular silicon before crushing and seed after crushing in example 1.
Figure 8 is the image of the feed granular silicon particles in example 1.
Figure 9 is the image of the seeds generated after feed granular silicon crushing in Example 1.
Figure 10 is the PSD columnar schematic diagram of feed granular silicon before grinding and seed after grinding in comparative example 1.
Figure 11 is the PSD curve of feed granular silicon before grinding and seed after grinding in comparative example 1.
Figure 12 is the image of the feed granular silicon particles in comparative example 1.
Figure 13 is the image of the seeds generated after feed granular silicon grinding in comparative example 1.
Figure 14 is a direct comparison of seed PSD's from an embodiment of the invention described in example 1 and comparative example 1.

Wherein, 1-FBR, 2-granular silicon, 3-package, 4-roll crush apparatus, 5-granular silicon product, 6-seed, 7, 7' -roller

## DETAILED DESCRIPTION

Furthermore, the foregoing descriptions of the embodiments according to the present invention are provided for illustration only, and not for the purpose of limiting the invention as defined by the appended claims and their equivalents.

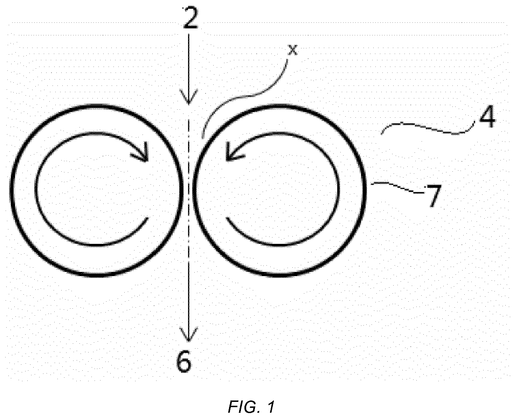

Figure 1 shows a embodiment of the apparatus for generating high sphericity seed of the present invention. A method for generating high sphericity seed, using a certain particle size distribution(PSD) range of granular silicon 2 as a raw material, passing through a roll crusher apparatus 4 to fracture, the roll crusher apparatus comprises at least one set of rollers, the roll crusher apparatus comprises a set of rollers 7, each set of rollers 7 includes two opposite rotation of rollers. By adjusting the gap width x between the sets of rollers, the silicon particles which size larger than the roller gap width x are crushed, the most silicon particles which size smaller than the roller gap width x directly pass through the gap. As the prepared seeds are the composition of crushed silicon particles and silicon particles which pass through the gap directly, wherein the most are uncrushed, so the prepared seeds have a high sphericity.

Actually, the particle size range $d_p$ of granular silicon emptied from FBR is, but not limited to $100\mu m \sim 2400\mu m$, it has a broad PSD range. But a narrow PSD range seeds can be obtained by adjusting the gap width x. In the present invention, The sphericity is that the prepared spherical morphology seed number ratio of total seed number, the more the proportion of the spherical seed number, the greater the sphericity.

About the roll crusher apparatus, the prior art can be referred. For example, Wacker's patent application US20090114748A1 discloses a roll crusher apparatus, it comprises a set of rollers, each set of rollers includes two opposite rotation of rollers, covering a hard metal coating on the surface of the roller, such as but not limit to WC. The difference is that the roll crusher apparatus is used to crush the polysilicon rods totally in Wacker's patent, and the almost size of a small silicon block are obtained. But in the present invention, the apparatus for generating high sphericity seed, needs to adjust the roller gap width according to the feed silicon PSD range, then the feed silicon particles feed into the roll crusher apparatus and are crushed.

In an embodiment, the feed granular silicon PSD range for the roll crusher apparatus is $100\mu m \sim 2400\mu m$, the roller gap width can be adjusted according to the feed silicon PSD range. Rather than feeding the roll crusher with only large particles including, but not limited to, particles greater than 1500 $\mu m$ that will all be crushed by a 1500 $\mu m$ or smaller effective gap width x setting, intermediate sized particles including, but not limited to, particles ranging from 100 to 1500 $\mu m$ are also included in the feed which are unaffected by the crushing and maintain their original spherical morphology. In an embodiment, rather than feeding the roll crusher with only large particles including, but not limited to, particles greater than 1250 $\mu m$ that will all be crushed by a 1250 $\mu m$ or smaller effective gap width x setting, intermediate sized particles including, but not limited to, particles ranging from 100 to 1250 $\mu m$ are also included in the feed which are unaffected by the crushing and maintain their original spherical morphology. In an embodiment, rather than feeding the roll mill with only large particles including, but not limited to, particles greater than 1000 $\mu m$ that will all be crushed by a 1000 $\mu m$ or smaller effective gap width x setting, intermediate sized particles including, but not limited to, particles ranging from 100 to 1000 $\mu m$ are also included in the feed which are unaffected by the crushing and maintain their original spherical morphology. In an embodiment, rather than feeding the roll mill with only large particles including, but not limited to, particles greater than 750 $\mu m$ that will all be crushed by a 750 $\mu m$ or smaller effective gap width x setting, intermediate sized particles including, but not limited to, particles ranging from 100 to 750 $\mu m$ are also included in the feed which are unaffected by the crushing and maintain their original spherical morphology. In an embodiment, rather than feeding the roll mill with only large particles including, but not limited to, particles greater than 1750 $\mu m$ that will all be crushed by a 1750 $\mu m$ or smaller effective gap width x setting, intermediate sized particles including, but not limited to, particles ranging from 100 to 1750 $\mu m$ are also included in the feed which are unaffected by the crushing and maintain their original spherical morphology. In an embodiment, rather than feeding the roll mill with only large particles including, but not limited to, particles greater than 2000 $\mu m$ that will all be crushed by a 2000 $\mu m$ or smaller effective gap width x setting, intermediate sized particles including, but not limited to, particles ranging from 100 to 2000 $\mu m$ are also included in the feed which are unaffected by the crushing and maintain their original spherical morphology. In an embodiment, rather than feeding the roll mill with only large particles including, but not limited to, particles greater than 2000 $\mu m$ that will all be crushed by a 2000 $\mu m$ or smaller effective gap width x setting, intermediate sized particles including, but not limited to, particles ranging from 100 to 2000 $\mu m$ are also included in the feed which are unaffected by the crushing and maintain their original spherical morphology. In an embodiment, rather than feeding the roll mill with only large particles including, but not limited to, particles greater than 2250 $\mu m$ that will all be crushed by a 2250 $\mu m$ or smaller effective gap width x setting, intermediate sized particles including, but not limited to, particles ranging from 100 to 2250 $\mu m$ are also included in the feed which are unaffected by the crushing and maintain their original spherical morphology. In an embodiment, rather than feeding the roll mill with only large particles including, but not limited to, particles greater than 2400 $\mu m$ that will all be crushed by a 2400 $\mu m$ or smaller effective gap width x setting, intermediate sized particles including, but not limited to, particles ranging from 100 to 2400 $\mu m$ are also included in the feed which are unaffected by the crushing and maintain their original spherical morphology.

In an embodiment, according to the median diameter $d_{50}$ of feed granular silicon and the median diameter $D_{50}$ of target seed, the roller gap width x may be adjusted to optimize the sphericity of the seed stock. As well known, $D_{50}$ refers to a corresponding diameter when the cumulative percentage of the particle size distribution of a sample reaches 50%. Its physical meaning that the particle size greater than it reaches 50%, and particles smaller than it also reaches 50%, So in general, $D_{50}$ is also called median diameter or median particle size. In present invention, in order to distinguish easily, the median diameter of feed granular silicon with certain PSD is noted as $d_{50}$, and the median diameter of target seed by crushing is noted as $D_{50}$. Once the raw material for generating seed is selected, the PSD range of the raw material can be determined by detecting and computing. In present invention, in a preferred embodiment, the roller gap width x, the PSD $d_p$ and median diameter $d_{50}$ of feed granular silicon, and the median diameter $D_{50}$ of target seed satisfy

the following relationship: $100\mu m < D_{50} < d_{50} < x < 2400\mu m$, wherein the granular silicon PSD $d_p$ is but not limit to $100\mu m$ $\sim 2400pm$, for example $d_p$ can be selected from $50\mu m \sim 3000\mu m$. It will be appreciated that those skilled in the art, the PSD of granular silicon product removed from FBR can be analyzed and calculated through online particle size analyzer, and can be calculated the median particle size, so it's purposeful for adjusting the size of the roller gap width x.

In one embodiment, while the PSD range of the feed granular silicon is $100\mu m \sim 2400\mu m$, its median diameter is $1500\mu m$, by adjusting the roller gap width x larger than $1500\mu m$, then the particles larger than $1500\mu m$ are all crushed, and the ratio of crushed particles is smaller than 50%. In this embodiment, the most silicon particles pass through the roll crusher directly and uncrushed, and maintain their original spherical morphology. The seeds prepared are the composition of uncrushed particles and crushed particles, but the most are the uncrushed ones, so the seeds prepared have a high sphericity. So while the median diameter is but not limit to $1250\mu m$, $750\mu m$, $1750\mu m$, $2000\mu m$ or $2250\mu m$, and so on, by adjusting the roller gap width x larger than the corresponding median diameter, then most of the granular silicon pass through the roll crusher apparatus uncrushed, so can increase the sphericity of the seeds.

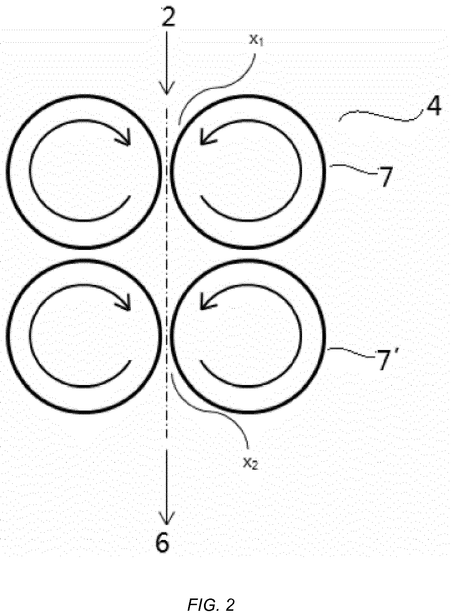

In a preferred embodiment, figure 2 shows another schematic diagram of the apparatus for generating high sphericity seed of the present invention. The roll crusher apparatus comprises two sets of rollers 7 and 7', the two sets of rollers positioned vertically, the raw material of granular silicon products pass through two sets of rollers. More preferred, the upper roller gap width $x_1$ and lower roller gap width $x_2$ satisfy the following relationship: $x_1 \geq x_2$, wherein $x_1$ is the upper roll gap width, $x_2$ is the lower roll gap width. The lower rollers can be used to adjust the PSD range and sphericity of the target seed narrowly. For example, to adjust the lower roll gap width $x_2$ according to the target seed size, preferred is but not limit to $D_{50} < x_2 < x_1$. In one embodiment, while the median diameter of feed granular silicon $d_{50}$ is $1500\mu m$, and the median diameter of target seed $D_{50}$ is $800\mu m$, according to the foregoing description, $x_1$ is needed to adjust to $1500\mu m < x_1 < 2400\mu m$, then $x_2$ adjust to $800\mu m < x_2 < 1500\mu m$, so the narrower PSD and higher sphericity seeds are obtained by adjusting the lower roller gap width $x_2$. As well known, the roll crusher apparatus can also comprise more sets of rollers, such as but not limit to three sets, four sets, five sets or six sets, and so on. It can be installed and adjusted according to the requirement of target seed, it also can be used through several sets of rollers in series or parallel to improve the efficiency of preparation for seed.

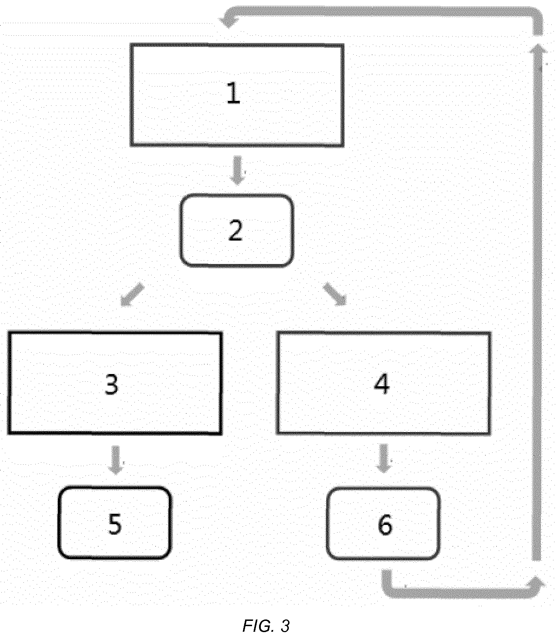

Another aspect of the present invention, figure 3 shows a simplified process flow schematic diagram for the operation of a fluidized bed reactor and seed generation of the present invention. In the embodiment, the crushing method is used to generate the fluidized bed granular silicon seed. In the FBR 1, the thermal decomposition reaction of silicon source gas is carried out and silicon is deposited on the surface of seeds, the high pure granular silicon products 2 are produced continuously. Portion of the granular silicon products 2 are sent to package 3 as the final product 5. In order to generate seed, portion of the granular silicon products 2 withdrawal of FBR are sent to generate the high spherical granular silicon seeds 6 by a set of roll crusher apparatus 4, the PSD of the particles are decreased. The seeds 6 are recycled back into FBR 1, and the granular silicon products 2 withdrawal of FBR continuously or semi-continuously. This seed recycle process is necessary in order to maintain the number of particles and PSD constant within the fluidized bed for prolonged continuous or semi-continuous operation, as silicon deposited on the particles within the reactor increases the diameter and sphericity of the particles as they grow larger. The recycle rate (percentage of product that is ground to seed and recycled back to the FBR), PSD and sphericity of the recycle material, initial bed PSD and sphericity, and deposition rate are the primary determinants of the steady-state PSD and sphericity of the fluidized bed. Thus, it's very important for maintaining performance and smooth operation of the FBR by preparing the narrow PSD and high sphericity seeds and recycling into the FBR smoothly. In comparison, the conventional sieving, grinding and other methods can not satisfy this requirement. Only through the present invention of roll crushing method, by controlling the above mentioned recycle rate, preparing a narrow PSD and high sphericity seed, the above technical result will be achieved, then a fluidized bed reactor long-term stable operation can be achieved.

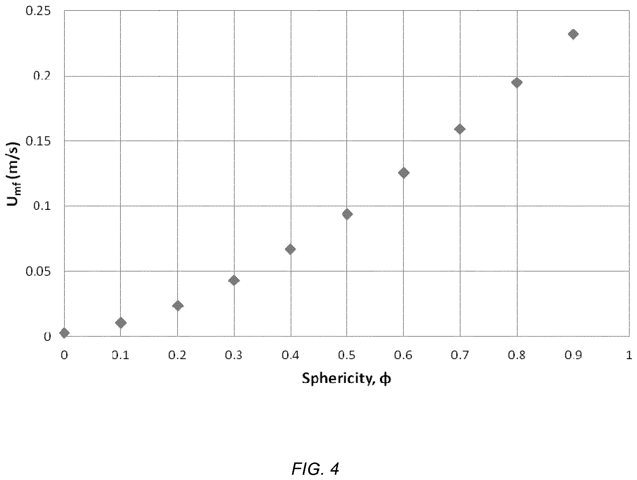

Otherwise, the sphericity of seeds is higher, the minimum fluidization velocity for FBR is greater. Figure 4 shows a graph showing minimum fluidization velocity vs. sphericity for a given seed distribution with dso of $850\mu m$. Here, $U_{mf}$ was calculated using Equation 1 (Ergun Equation).

$$\frac{\Delta P}{L} = \frac{150\,\mu\,(1-\varepsilon)^2}{\varepsilon^3 \Phi^2 d_p{}^2} U_0 + \frac{1.75\,(1-\varepsilon)\rho}{\varepsilon^3 \Phi d_p} U_0{}^2$$

As can be seen from Figure 4, with the sphericity of the seeds increases, the minimum fluidized velocity $U_{mf}$ for FBR also increases. While a fixed fluidized gas inlet velocity and fixed $U_g/U_{mf}$ are needed in one case, it has a significant effect to reduce the diameter of the fluidized bed reactor.

In present invention, the silicon source gas can be selected from $SiH_a X_b$, wherein, X=F, Cl, Br, I, a or b is selected independently from a =0~4, b=0~4, and a+b=4. In a preferred embodiment, the silicon source gas is silane or chlorosilane. It is preferred, the silicon source gas is but not limit to TCS. For example, it can be selected from $SiH_4$, $SiH_2Cl_2$, $SiHCl_3$, $SiCl_4$, $SiH_2Br_2$, $SiHBr_3$, $SiBr_4$, $SiH_2I_2$, $SiHI_3$, $SiI_4$ and their mixture. It will be appreciated that those skilled in the art, the silicon source gas can be selected from $Si_2H_6$, $Si_nH_{2n+2}$, and so on. The silicon source gas can mix with one or more kinds of fluidized gas, the fluidized gas includes $H_2$ or one or more kinds of inert gas selected from following gas: such as $N_2$, He, Ar, Ne, and so on, which can make the bed fluidized.

In present invention, any disclosure without particular description can refer to the prior art, it will be appreciated that those skilled in the art. For example, the operation of seed recycle back into FBR, removing granular silicon product, production sieving and package, and so on, these are not the inventive point of present invention. Otherwise, the fluidized velocity is usually larger than the minimum fluidized velocity $U_{mf}$ for FBR, 1.1 $U_{mf}$ ~3.0$U_{mf}$ is preferred, and 1.2 $U_{mf}$ ~2.0$U_{mf}$ is more preferred. The size of granular silicon seed is usually 50~1000$\mu$m, 100~500$\mu$m is preferred; and the size of produced granular silicon product is usually 100~3000$\mu$m, 800~2000$\mu$m is preferred.

The disclosure may be more completely understood in consideration of the following detailed description of various embodiments of the disclosure, but they are provided for illustration only, and not for the purpose of limiting.

## EXAMPLE 1

Table 1 shows the details pertaining to an embodiment of the invention where a test run in which a high sphericity seed batch was prepared as a recycle material for a fluidized bed reactor. Two sets of rollers are used, and the upper roll gap width is 2000$\mu$m, the lower one is 1500$\mu$m, the PSD range of feed raw material is 100-2400$\mu$m, and its median diameter is 1135 median diameter, finally the seeds are generated by roll crushing, which median diameter is 857$\mu$m.

TABLE 1

| | |
|---|---|
| Feed Rate | 250 lb/h |
| Upper Roll Gap Width, $x_1$ | 2000 $\mu$m |
| Lower Roll Gap Width, $x_2$ | 1500 $\mu$m |
| $d_p$ Range, Product Feed to Roll Crusher | 100 - 2400 $\mu$m |
| $d_{50}$ Product Feed to Roll Crusher | 1135 |
| $D_{50}$ Seed Produced in Roll Crusher | 857 |

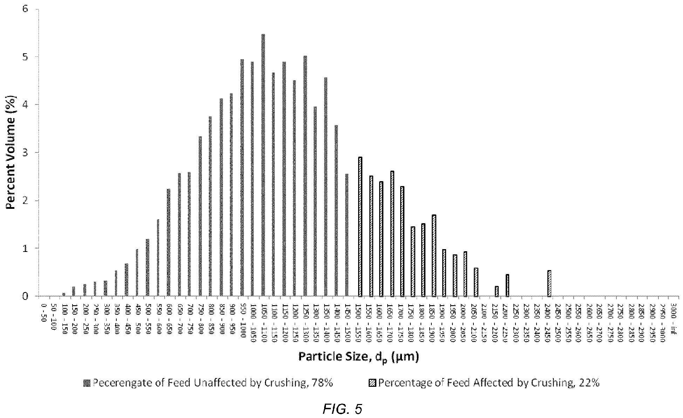

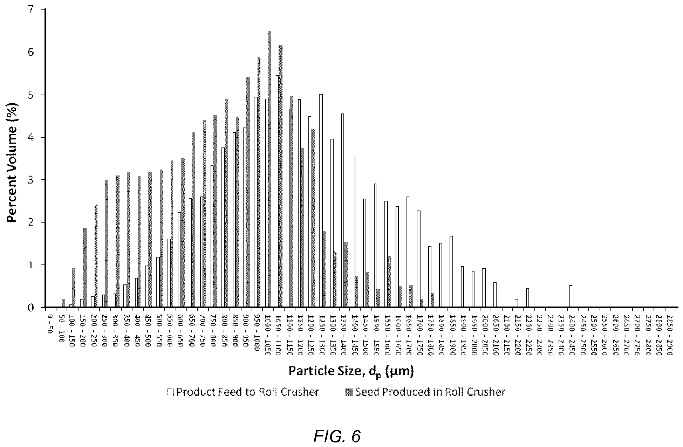

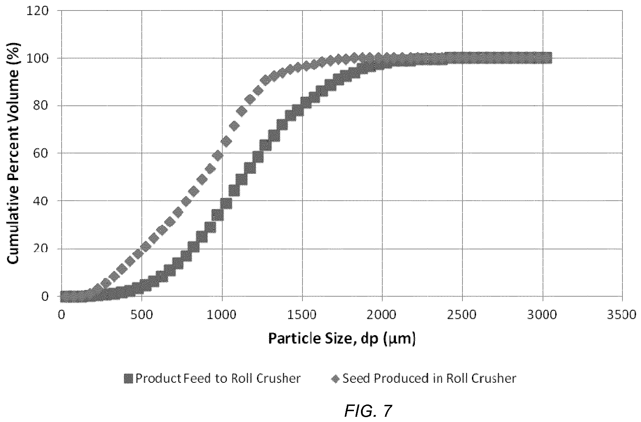

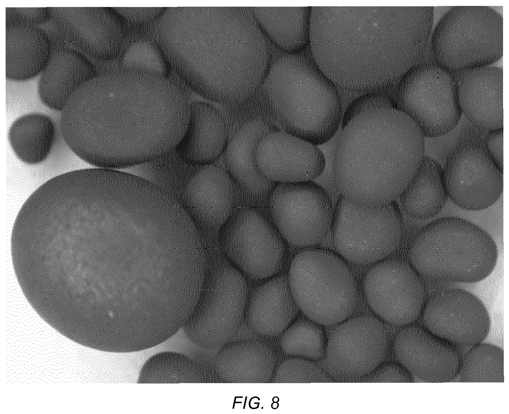

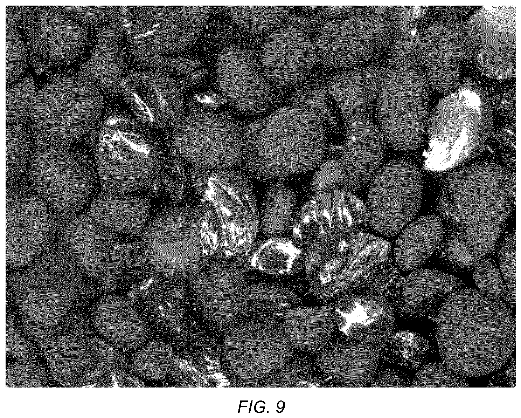

The PSD of the feed to the roll crusher is plotted in Figure 5. It is shown that approximately 78% of feed granular silicon pass through the roll crusher apparatus and are uncrushed, only 22% of granular silicon are crushed. The PSD of feed granular silicon before crushing and seed after crushing are shown in Figure 6. It can be seen that big silicon particles are crushed into small particles, and the PSD range of seeds is narrowed. Figure 7 displays the same particle size distribution data plotted as a cumulative volume percent. It can be seen that the size of particles become smaller, and the number of same size particles become larger. Figures 8&9 are images of the feed granular silicon and silicon particles generated based on the embodiment of the invention described in Example 1. Both images were taken at 13.4 × magnification. It can be observed in Figure 8 that the sphericity of particles is good, but they are combination of small and large particles, and have a broad PSD range. After roll crushing, in Figure 9, note that the cracked particles comprise only a portion of the seed batch, most of particles are uncracked, and its total sphericty is high and has an average particle size.

## COMPARATIVE EXAMPLE 1(EXAMPLE 2)

Table 2 lists the test details pertaining to a test run in which a comparative study is completed by an alternate grinding method for comparison with an embodiment of the invention.

TABLE 2

| | |
|---|---|
| Feed Rate | 250 lb/h |
| $d_p$ Range, Product Feed to Roll Crusher | > 2400 $\mu$m |
| $d_{p,50}$ Seed Product in Roll Crusher | 858 |

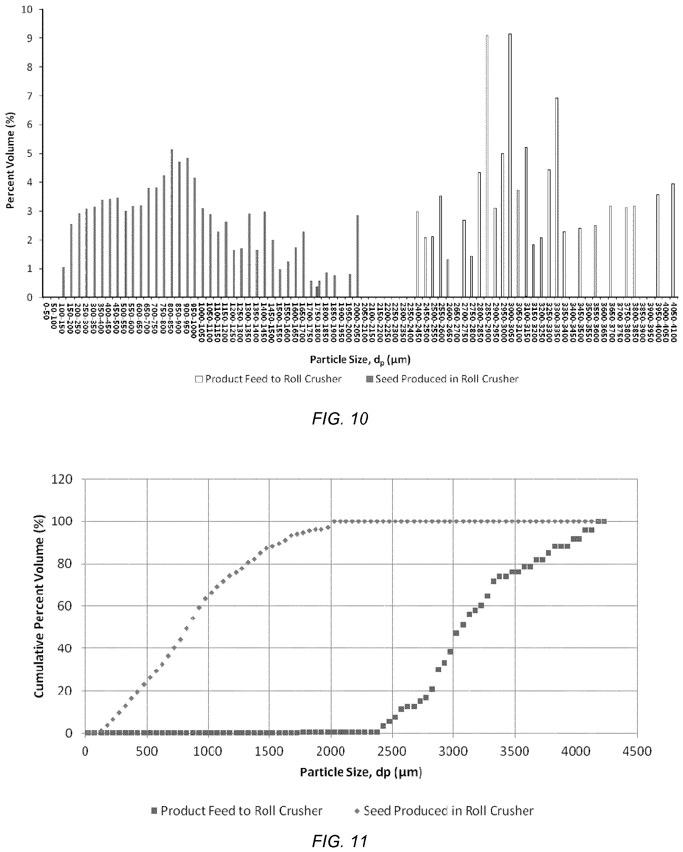

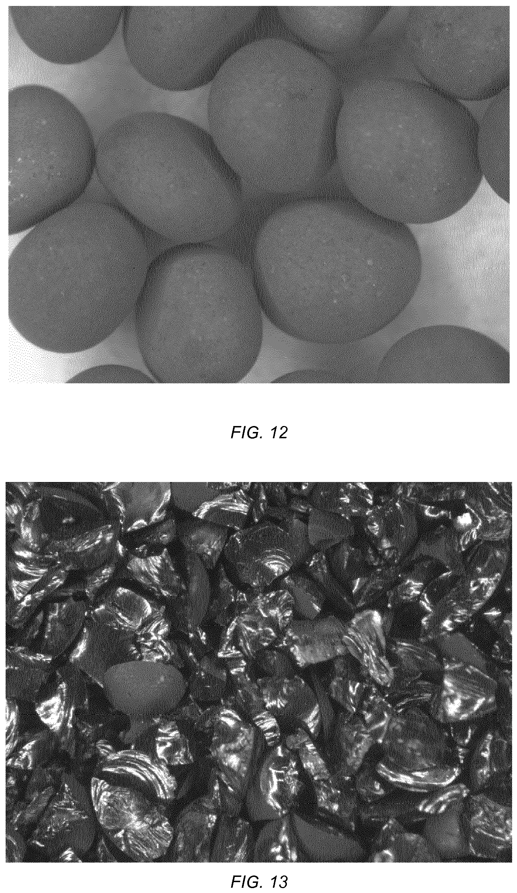

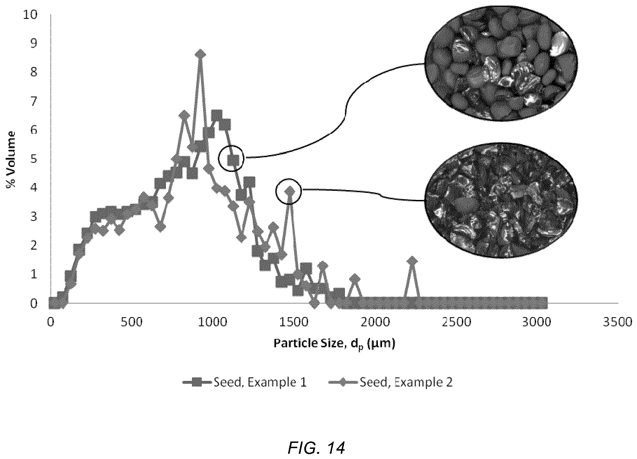

Figures 10 show the PSD of the feed material and the seed generated by grinding. In this example, the feed material is of larger size than in the embodiment described in Example 1, so each particle is affected by the grinding process and cracked to small particles. Figure 11 displays the same particle size distribution data plotted as a cumulative volume percent, it's easier to find that the particles bigger than 2400$\mu$m are all cracked to the size smaller than 2000$\mu$m. Figures 12&13 are images of the silicon particles from the granular silicon and seed after grinding, taken at 13.4 × magnification. It can be seen that the granular silicon has a high sphericity and average size, but all are cracked after grinding, and has a low sphericity. Figure 14 provides a direct comparison of seed PSD's from an embodiment of the invention described in example 1 and comparative example 1. Note that a similar particle size distribution was produced by both methods, yet the shape factors are very different. Specifically, the sphericity of the seed products produced by the embodiment described in example 1 was higher than that of the seed products produced by comparative example 1.

The voidage $\varepsilon$(or porosity, Ratio between void volume of silicon particles in the bed to total volume) of prepared seeds in FBR is also disclosed in present invention. Table 3 shows the voidage, at the packed bed and minimum fluidization conditions for each seed batch, such as typical product, seed from Example 1 and seed from Comparative Example 1. This data is given in comparison to a typical polysilicon granule product batch from a fluidized bed reactor.

TABLE 3

|  | Packed Bed Porosity % | Porosity at $U_{mf}$ % |
| --- | --- | --- |
| Typical Product | 33.5 | 35.3 |
| Seed from Example 1 | 35.7 | 45.7 |
| Seed from Comparative Example 1 | 43.4 | 54.7 |

In both examples, the seed exhibits a higher voidage compared with a typical product. At minimum fluidization it can be seen that the seed batch from Comparative Example 1 has porosity that is 19.4% higher than the product porosity. The seed from the embodiment described in Example 1, however, provides a less severe difference in porosity at minimum fluidization, which is 10.4% higher than the product porosity. Thus, compared to the conventional grinding method, the porosity of the seed prepared in the present invention is lower, and easier to avoid the formation of silicon powder and other negative impact.

## Claims

1. A method for generating fluidized bed granular silicon (2), comprising the steps of:

   1) generating seed (6) using granular silicon raw material , the granular silicon raw material having a median diameter ,d50, the method including the following steps 2) and 3);
   2) crushing said granular silicon by passing through a roll crusher apparatus (4), the roll crusher apparatus (4) comprising at least one set of rollers (7), wherein the roller gap width between the sets of rollers is adjusted in such a way that the granular silicon particles which are larger in size than the roller gap width are crushed, and the granular silicon particles which are smaller in size than the roller gap width directly pass through the gap, thereby generating the seed (6),
   3) and wherein the roller gap width x, the median diameter $d_{50}$ of granular silicon raw material and the median diameter $D_{50}$ of target seed satisfies the following relationship: $100\mu m < D_{50} < d_{50} < x < 2400\mu m$, wherein the granular silicon particle size distribution range $d_p$ is $100\mu m$ to $2400\mu m$;
   4) introducing silicon source gas and fluidized gas into a fluidized bed reactor (1) (FBR) within which the seed (6) is loaded, where a thermal decomposition reaction is carried out continuously under 500°C to 1200°C reaction temperature, and granular silicon products (2) are prepared from depositing silicon on the surface of the seeds (6);
   5) withdrawing a first portion of the granular silicon products (2) prepared in step 1) from the FBR and sending for packaging (3) as a final product (5);
   6) preparing a second portion of the granular silicon products (2) and withdrawing them from the FBR and sending them to generate the granular silicon seed (6) in steps 1) to 3), the seeds (6) produced by said method being recycled back into the FBR, in order to maintain the number of particles constant within the fluidized bed reactor (1) during step 4).

2. The method as claimed in claim 1, **characterized in that** the roll crusher apparatus (4) comprises two sets of rollers (7,7'), the two sets of rollers are positioned vertically, and the raw material of granular silicon particles passes through the two sets of rollers.

3. The method as claimed in claim 2, **characterized in that** an upper roller gap width $x_1$ and lower roller gap width $x_2$ satisfy the following relationship: $x_1 \geq x_2$, wherein $x_1$ is the upper roller gap width, $x_2$ is the lower roller gap width.

4. The method as claimed in claim 3, wherein the upper roller gap width is $2000\mu m$, the lower roller gap is $1500\mu m$, the PSD range of feed raw material is $100$-$2400\mu m$, its median diameter is $1135\mu m$, and the median diameter of the seed generated by roll crushing is 857 $\mu$m.

**5.** The method as claimed in claim 1, **characterized in that** the silicon source gas can be selected from SiH$_a$X$_b$, wherein, X = F, Cl, Br, I; a or b is selected independently from a is from 0 to 4, b is from 0 to 4, and a+b = 4.

**6.** The method as claimed in claim 1, **characterized in that** the silicon source gas is silane.

**7.** The method as claimed in claim 1, **characterized in that** the silicon source gas is chlorosilane.

**8.** The method as claimed in claim 1, **characterized in that** the silicon source gas is trichlorosilane (TCS).


**Patentansprüche**

**1.** Verfahren zum Erzeugen von granularem Wirbelschicht-Silicium (2), umfassend die folgenden Schritte:

1) Erzeugen von Saatgut (6) unter Verwendung von granularem Silicium-Rohmaterial, wobei das granulare Silicium-Rohmaterial einen mittleren Durchmesser von d50 aufweist, wobei das Verfahren die folgenden Schritte 2) und 3) umfasst;

2) Zerkleinern des granularen Siliciums durch Hindurchführen durch eine Walzenbrechvorrichtung (4), wobei die Walzenbrechvorrichtung (4) mindestens einen Satz von Walzen (7) umfasst, wobei die Walzenspaltbreite zwischen den Walzensätzen so eingestellt ist, dass die granularen Siliciumteilchen, die in der Größe größer als die Walzenspaltbreite sind, zerkleinert werden, und die granularen Siliciumteilchen, die in der Größe kleiner als die Walzenspaltbreite sind, direkt durch den Spalt hindurchgehen, wodurch das Saatgut (6) erzeugt wird,

3) und wobei die Walzenspaltbreite x, der mittlere Durchmesser d$_{50}$ des granularen Silicium-Rohmaterials und der mittlere Durchmesser D$_{50}$ des Ziel-Saatguts die Beziehung erfüllen: 100 $\mu$m < D$_{50}$ < d$_{50}$ < x < 2.400 $\mu$m, wobei der Korngrößenverteilungsbereich d$_p$ der granularen Siliciumteilchen 100 $\mu$m bis 2.400 $\mu$m ist;

4) Einführen von Silicium-Quellgas und Wirbelschichtgas in einen Wirbelschichtreaktor (1) *(fluidized bed reactor, FBR)*, in den das Saatgut (6) eingebracht wird, wobei eine thermische Zersetzungsreaktion kontinuierlich unter 500 °C bis 1.200 °C Reaktionstemperatur durchgeführt wird und wobei körnige Siliciumprodukte (2) aus der Abscheidung von Silicium auf der Oberfläche des Saatguts (6) hergestellt werden;

5) Entnehmen eines ersten Teils der in Schritt 1) hergestellten granularen Siliciumprodukte (2) aus dem FBR und Senden zur Verpackung (3) als Endprodukt (5);

6) Herstellen eines zweiten Teils der granularen Siliciumprodukte (2) und Entnehmen dieser aus dem FBR und Senden dieser zur Erzeugung des granularen Silicium-Saatguts (6) in den Schritten 1) bis 3), wobei das durch dieses Verfahren erzeugte Saatgut (6) in den FBR zurückgeführt wird, um die Anzahl der Teilchen innerhalb des Wirbelschichtreaktors (1) während des Schrittes 4) konstant zu halten.

**2.** Verfahren nach Anspruch 1, **dadurch gekennzeichnet, dass** die Walzenbrechvorrichtung (4) zwei Walzensätze (7, 7') umfasst, wobei die beiden Walzensätze vertikal angeordnet sind und das Rohmaterial aus granularen Siliziumteilchen durch die beiden Walzensätze hindurchgeht.

**3.** Verfahren nach Anspruch 2, **dadurch gekennzeichnet, dass** eine obere Walzenspaltbreite X$_1$ und eine untere Walzenspaltbreite X$_2$ die folgende Beziehung erfüllen:
X$_1 \geq$ X$_2$, wobei X$_1$ die obere Walzenspaltbreite und X$_2$ die untere Walzenspaltbreite ist.

**4.** Verfahren nach Anspruch 3, wobei die obere Walzenspaltbreite 2.000 $\mu$m, der untere Walzenspalt 1.500 $\mu$m, der PSD-Bereich des Ausgangsrohmaterials 100-2.400 $\mu$m, sein mittlerer Durchmesser 1.135 $\mu$m und der mittlere Durchmesser des durch Walzenzerkleinerung erzeugten Saatguts 857 $\mu$m beträgt.

**5.** Verfahren nach Anspruch 1, **dadurch gekennzeichnet, dass** das Silicium-Quellgas aus SiH$_a$X$_b$ ausgewählt werden kann, wobei X = F, Cl, Br, I ist;
wobei a oder b unabhängig von a ausgewählt ist und von 0 bis 4 ist, b 0 bis 4 ist und a+b = 4 sind.

**6.** Verfahren nach Anspruch 1, **dadurch gekennzeichnet, dass** das Silicium-Quellgas Silan ist.

**7.** Verfahren nach Anspruch 1, **dadurch gekennzeichnet, dass** das Silicium-Quellgas Chlorsilan ist.

8. Verfahren nach Anspruch 1, **dadurch gekennzeichnet, dass** das Silicium-Quellgas Trichlorsilan (TCS) ist.

**Revendications**

1. Procédé de génération de silicium granulaire de lit fluidisé (2), comprenant les étapes :

   1) de génération d'un germe (6) au moyen d'une matière première de silicium granulaire, la matière première de silicium granulaire ayant un diamètre médian, d50, le procédé comprenant les étapes 2) et 3) suivantes ;
   2) de broyage dudit silicium granulaire en passant à travers un appareil de broyage à cylindres (4), l'appareil de broyage à cylindres (4) comprenant au moins un ensemble de cylindres (7), dans lequel la largeur d'intervalle de cylindres entre les ensembles de cylindres est ajustée de telle manière que les particules de silicium granulaire dont la taille est supérieure à la largeur de l'intervalle des cylindres soient écrasées, et les particules de silicium granulaires qui sont inférieures à la largeur de l'intervalle des cylindres passent directement à travers l'intervalle, générant ainsi le germe (6),
   3) et dans lequel la largeur d'intervalle de cylindres x, le diamètre médian $d_{50}$ de la matière première de silicium granulaire et le diamètre médian $D_{50}$ de la germe cible satisfont la relation suivante : $100 \, \mu m < D_{50} < d_{50} < x < 2400 \, \mu m$, dans lequel la plage de distribution granulométrique de silicium granulaire $d_p$ est de 100 à 2 400 $\mu m$ ;
   4) d'introduction d'un gaz source de silicium et d'un gaz fluidisé dans un réacteur de lit fluidisé (1) (FBR) à l'intérieur duquel le germe (6) est chargé, où une réaction de décomposition thermique est effectuée en continu sous une température de réaction de 500 à 1 200 °C, et les des produits de silicium granulaire (2) sont préparés à partir du dépôt de silicium sur la surface des germes (6) ;
   5) d'extraction d'une première partie des produits de silicium granulaire (2) préparés à l'étape 1) du FBR et d'envoi pour emballage (3) comme produit final (5) ;
   6) de préparation d'une seconde partie des produits de silicium granulaire (2) et d'extraction de celle-ci du FBR et d'envoi de celle-ci pour générer le germe de silicium granulaire (6) dans les étapes 1) à 3), les germes (6) produits par ledit procédé étant recyclés dans le FBR, afin de maintenir le nombre de particules constant à l'intérieur du réacteur de lit fluidisé (1) à l'étape 4).

2. Procédé selon la revendication 1, **caractérisé en ce que** l'appareil de broyage à cylindres (4) comprend deux ensembles de cylindres (7, 7'), les deux ensembles de cylindres sont positionnés verticalement et la matière première de particules de silicium granulaire à travers les deux ensembles de cylindres.

3. Procédé selon la revendication 2, **caractérisé en ce qu'**une largeur d'intervalle de cylindre supérieur $x_1$ et une largeur d'intervalle de cylindre inférieur $X_2$ satisfont la relation suivante : $X_1 \geq X_2$, $X_1$ représentant la largeur d'intervalle de cylindre supérieur, $X_2$ représentant la largeur de l'intervalle de cylindre inférieur.

4. Procédé selon la revendication 3, dans lequel la largeur de l'intervalle de cylindre supérieur est de 2000 $\mu m$, l'intervalle de cylindre inférieur est de 1 500 $\mu m$, la plage PSD de la matière première d'alimentation est de 100 à 2 400 $\mu m$, son diamètre médian est de 1 135 $\mu m$ et le diamètre médian du germe généré par broyage au cylindre est de 857 $\mu m$.

5. Procédé selon la revendication 1, **caractérisé en ce que** le gaz source de silicium peut être choisi parmi $SiH_aX_b$, dans lequel X = F, Cl, Br, I ; a ou b, sélectionné indépendamment de a, est de 0 à 4, b est de 0 à 4 et a + b = 4.

6. Procédé selon la revendication 1, **caractérisé en ce que** le gaz source de silicium est le silane.

7. Procédé selon la revendication 1, **caractérisé en ce que** le gaz source de silicium est le chlorosilane.

8. Procédé selon la revendication 1, **caractérisé en ce que** le gaz source de silicium est le trichlorosilane (TCS).

FIG. 1

*FIG. 2*

FIG. 3

*FIG. 4*

*FIG. 5*

*FIG. 6*

FIG. 7

FIG. 8

FIG. 9

FIG. 10

FIG. 11

FIG. 12

FIG. 13

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010243963 A1
- US 5798137 A
- US 20090114748 A1